# EUROPÄISCHE PATENTANMELDUNG

(11) **EP 1 414 166 A1**
(43) Veröffentlichungstag der Anmeldung: **28.04.2004**
(21) Anmeldenummer: 02023968.7
(22) Anmeldetag: 25.10.2002
(51) Int. Cl.: H04B 7/06

(54) **Verfahren zur Datenübertragung in einem Mobilfunksystem**

(71) Anmelder: SIEMENS AKTIENGESELLSCHAFT, 80333 München (DE)
(72) Erfinder: Frey, Thomas, Dr., 89081 Ulm (DE); Kiessling, Mario, 89075 Ulm (DE); Purat, Marcus, Dr., 12209 Berlin (DE); Reinhardt, Markus, Dr., 89231 Neu-Ulm (DE); Seeger, Alexander, Dr., 85622 Feldkirchen (DE); Viering, Ingo, 89075 Ulm (DE)

(57) **Zusammenfassung**

Die Erfindung betrifft ein Verfahren zur Datenübertragung mit von einer zentralen Funkkommunikationseinrichtung zu einem Teilnehmer eines UMTS-FDD-Funkkommunikationssystems.

Dabei werden aus Daten eines teilnehmerspezifischen physikalischen Datenübertragungskanals und aus Steuerungsdaten eines teilnehmerspezifischen physikalischen Kontrollübertragungskanals mit Hilfe eines Multiplexverfahrens ein Informationssignal eines teilnehmerspezifischen physikalischen Übertragungskanals gebildet und das Informationssignal gespreizt und verwürfelt. Das Informationssignal gelangt als Eingangsdatensignal an mindestens zwei Signalpfade, wobei in jedem Signalpfad das Eingangsdatensignal mit teilnehmerspezifischen Wichtungsfaktoren zur Bildung eines gewichteten Datensignals multipliziert wird, und in jedem Signalpfad das gewichtete Datensignal mit einem strahlungsdiagrammspezifischen Pilotsignal eines gemeinsamen Pilotübertragungskanals zur Bildung eines Antennensignals addiert wird. In jedem Signalpfad wird das Antennensignal mit strahlungsdiagrammspezifischen Wichtungsfaktoren zur Bildung eines gewichteten Antenennsignals multipliziert und einer Antenneneinrichtung zur Abstrahlung zugeführt.

## Beschreibung

Die Erfindung betrifft ein Verfahren zur Datenübertragung von einer zentralen Funkkommunikationseinrichtung zu einem Teilnehmer eines UMTS-FDD-Funkkommunikationssystems.

Bei einem UMTS-FDD-Funkkommunikationssystem, Release '99, ist derzeit eine Verwendung von zwei Sendeantennen, die seitens einer zentralen Funkkommunikationseinrichtung (NodeB) angeordnet sind und eine Space-Diversity-Antenneneinrichtung bilden, standardisiert. Mit Hilfe der beiden Sendeantennen, über die ein Teilnehmersignal im Downlink von einer zentralen Funkkommunikationseinrichtung zum Teilnehmer gleichzeitig abgestrahlt wird, wird ein Diversity-Gewinn erzielt, der zu einer Erhöhung einer Funkübertragungskapazität führt.

Eine Verwendung von mehr als zwei Sendeantennen, bzw. eine Verwendung eines sendeseitig angeordneten Antennenarrays bzw. einer sendeseitig angeordneten Smart-Antenna-Anordnung, sowie Signalverarbeitungsalgorithmen für eine durchzuführende Strahlungsdiagrammformung (Beamforming) werden derzeit auf ihre Einsatzmöglichkeit bei einer zentralen Funkkommunikationseinrichtung eines UMTS-FDD-Funkkommunikationssystem untersucht.

Dabei sind einerseits sogenannte "Feedback-Information" basierte Verfahren ("Closed-Loop"-Verfahren) und andererseits sogenannte "Uplink-Information" basierte Verfahren zur Datenübertragung von der zentralen Funkkommunikationseinrichtung (NodeB) zum Teilnehmer bekannt.

Beim "Closed-Loop"-Verfahren werden seitens des NodeB als zentraler Funkkommunikationseinrichtung zwei Sendeantennen zur Datenübertragung bzw. zur Abstrahlung von Teilnehmersignalen im Downlink verwendet. Mit Hilfe des Diversity-Gewinns wird eine Erhöhung der Funkübertragungskapazität erreicht. Eine bei diesem Verfahren einzuführende Signalisierung von Feedback-Informationen zwischen Teilnehmer und NodeB verursacht lediglich geringen zusätzlichen Signalisierungsaufwand.

Zu den "Uplink-Information" basierten Verfahren ist beispielsweise ein sogenanntes "Grid-of-Beam"-Verfahren zuordenbar, bei dem beim NodeB sendeseitig eine Strahlungsdiagrammformung zur Gewinnerhöhung durchgeführt wird. Bei diesem Verfahren wird eine beträchtlichen Erhöhung der Funkübertragungskapazität innerhalb des Funkkommunikationssystems erreicht.

Es ist Aufgabe der vorliegenden Erfindung, ein Verfahren zur Datenübertragung von einer zentralen Funkkommunikationseinrichtung zu einem Teilnehmer derart zu verbessern, dass in einem FDD-UMTS-Funkkommunikationssystem eine Erhöhung der Funkübertragungskapazität erzielt wird.

Diese Aufgabe wird durch die Merkmale des Patentanspruchs 1 gelöst. Vorteilhafte Weiterbildungen sind in den Unteransprüchen angegeben.

Bei der vorliegenden Erfindung werden das "Closed-Loop"-Verfahren und das "Grid-of-Beam"-Verfahren miteinander kombiniert. Dabei wird einerseits eine Erhöhung der Funkübertragungskapazität dadurch erreicht, dass mit Hilfe der Strahlungsdiagrammformung eine Gewinnerhöhung erzielt wird, und andererseits wird die Funkübertragungskapazität dadurch erhöht, dass mit Hilfe des sendeseitigen Antennendiversity ein Diversity-Gewinn erzielt wird. Das sendeseitige Antennendiversity wird dabei mit Hilfe einer Space-Diversity-Antennenanordnung oder mit Hilfe einer Polarisations-Diversity-Antennenanordnung realisiert.

Besonders bevorzugt werden bei der vorliegenden Erfindung sogenannte "Dual-Polarisierte"-Sendeantennen bei der Polarisations-Diversity-Antennenanordnung verwendet. Diese weisen in einem Antennengehäuse platzsparend üblicherweise zwei getrennt anzusteuernde Polarisationen auf. Mit derartigen Sendeantennen sind Antennen-Arrays bzw. Smart-Antennas mit geringen mechanischen Abmessungen realisierbar.

Besonders vorteilhaft werden bei der vorliegenden Erfindung entweder horizontal-vertikal-polarisierte Antennen oder X-polarisierte Antennen, die eine +45°Polarisation und eine -45°Polarisation aufweisen, verwendet.

Besonders bei einer Funkversorgung innerhalb von Städten mit einer hohen Teilnehmerdichte ist das erfindungsgemäße Verfahren aufgrund der erzielbaren Erhöhung der Funkübertragungskapazität besonders vorteilhaft einsetzbar.

Im Folgenden wird ein Ausführungsbeispiel der vorliegenden Erfindung anhand einer Zeichnung näher erläutert. Dabei zeigt:
- FIG 1: ein Blockschaltbild zur Datenübertragung mit Hilfe eines "Closed-Loop"-Verfahrens, gemäß dem Stand der Technik,
- FIG 2: ein Blockschaltbild zur Datenübertragung mit Hilfe eines "Grid-of-Beam"-Verfahrens, gemäß dem Stand der Technik, und
- FIG 3: ein Blockschaltbild zur Datenübertragung gemäß der vorliegenden Erfindung.

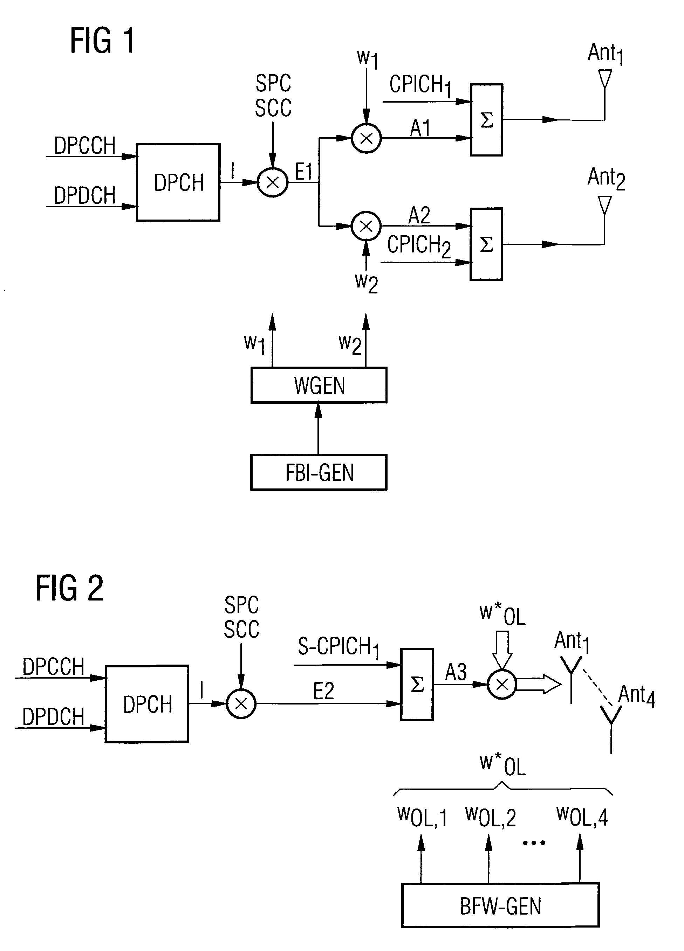

FIG 1 zeigt ein Blockschaltbild zur Datenübertragung mit Hilfe eines "Closed-Loop"-Verfahrens, gemäß dem Stand der Technik.

Bei einem FDD-UMTS-Funkkommunikationssystem, Release '99, werden Steuerungsdaten eines sogenannten "Dedicated Physical Control Channel" (DPCCH), der einen teilnehmerspezifischen physikalischen Kontrollübertragungskanal bildet, mit Daten eines sogenannten "Uplink Dedicated Physical Data Channel" (DPDCH), der einen teilnehmerspezifischen physikalischen Datenübertragungskanal bildet, mit Hilfe eines Multiplexverfahrens zu einem Informationssignal I eines sogenannten "Dedicated Physical Channel" (DPCH) zusammengefasst, der einen teilnehmerspezifischen physikalischen Übertragungskanal bildet.

Das Informationssignal I wird mit Hilfe eines Spreizcodes SPC ("spreading code") und mit Hilfe eines Verwürfelungscodes SCC ("scrambling code") gespreizt, verwürfelt und dadurch ein Eingangssignal E1 für eine nachfolgende Verarbeitung gebildet.

Seitens einer als NodeB ausgestalteten zentralen Funkkommunikationseinrichtung sind zwei Sendeantennen Ant1 bzw. Ant2 in einer Space-Diversity-Antennenanordnung vorgesehen. Für jede dieser Sendeantennen Ant1 bzw. Ant2 wird das Eingangssignal E1 jeweils mit teilnehmerspezifischen Wichtungsfaktoren w1 bzw. w2 multipliziert, wodurch für die Sendeantenne Ant1 ein gewichtetes Antennensignal A1 bzw. für die Sendeantenne Ant2 ein gewichtetes Antenennsignal A2 gebildet wird.

Die Bildung bzw. Generierung der teilnehmerspezifischen Wichtungsfaktoren w1 und w2 erfolgt mit Hilfe einer Einrichtung WGEN und basiert auf Feedback-Informationen FBI, die mit Hilfe einer Einrichtung FBI-GEN gewonnen werden. Die Feedback-Informationen FBI werden aus einer Uplink-Verbindung gewonnen, die mit Hilfe des "Uplink Dedicated Physical Data Channel" (DPDCH), also des teilnehmerspezifischen physikalischen Datenübertragungskanals, durchgeführt wird.

Das gewichtete Antennensignal A1 wird mit einem Pilotsignal CPICH₁ eines sogenannten "Common Pilot Channel" CPICH addiert und der Sendeantenne Ant1 zur Abstrahlung zugeführt, während das gewichtete Antennensignal A2 mit einem Pilotsignal CPICH₂ des "Common Pilot Channel" CPICH addiert und der Sendeantenne Ant2 zur Abstrahlung zugeführt wird. Der "Common Pilot Channel" CPICH bildet dabei einen gemeinsamen Pilotübertragungskanal.

Dieses Verfahren ist im UMTS-FDD-Standardisierungs-Dokument TS 25.214, Kapitel 7, ausführlich dargestellt.
Weitere Informationen sind zusätzlich den Standardisierungsdokumenten TS 25.211 bis TS 25.215 entnehmbar.

FIG 2 zeigt ein Blockschaltbild zur Datenübertragung mit Hilfe eines "Grid-of-Beam"-Verfahrens, gemäß dem Stand der Technik.

Vergleichend zu FIG 1 wird das Informationssignal I des "Dedicated Physical Channel" DPCH mit Hilfe des Spreizcodes SPC gespreizt, mit Hilfe des Verwürflungscodes SCC verwürfelt und ein Eingangssignal E2 gebildet. Das Eingangssignal E2 wird nachfolgend mit einem Pilotsignal S-CPICH₁ eines sogenannten "Secondary Common Pilot Channel" S-CPICH zur Bildung eines Antennensignals A3 addiert. Der "Secondary Common Pilot Channel" S-CPICH ist für UMTS-FDD standardisiert und ist strahlungsdiagrammspezifisch einem Teilnehmer bzw. einer Gruppe von Teilnehmern zuordenbar.

Das durch Addition gebildete Antennensignal A3 wird mit Wichtungsfaktoren w_{OL,1} bis w_{OL,4} multipliziert und ein derart gebildetes gewichtetes Antennensignal A4 gelangt an insgesamt vier Antennen Ant1 bis Ant4 eines Antennenarrays zur Abstrahlung. Die Wichtungsfaktoren w_{OL,1} bis w_{OL,4} bilden einen Vektor w_{OL}*.

Die Wichtungsfaktoren w_{OL,1} bis w_{OL,4} werden mit Hilfe einer Einrichtung BFW-GEN strahlungsdiagrammspezifisch und basierend auf einer Schätzung einer Uplink-Verbindung vom Teilnehmer zum NodeB gewonnen.

Das hier gezeigt Verfahren ist in der Druckschrift "DOWNLINK BEAMFORMING FOR FREQUENCY DIVISION DUPLEX SYSTEMS", K.Hugl, J.Laurila, E.Bonek, Proceedings of Global Telecommunications Conference (GLOBECOM), Rio de Janeiro, December 1999 bzw. in der Druckschrift "The Spectrum Efficiency of a Basestation Antennas Array System for Spatially Selective Transmission", P.Zetterberg, B.Ottersten, IEEE Transactions on Vehicular Technology, Vol. 44, pp. 651-660, Aug. 1995 bzw. in der Druckschrift "Frequency Transformation Based Downlink Beamforming", K. Hugl, Proceedings COST259/260 Joint Workshop Spatial Channel Models and Adaptive Antennas, pp. 111-118, April 1999, Vienna, Austria, näher beschrieben.

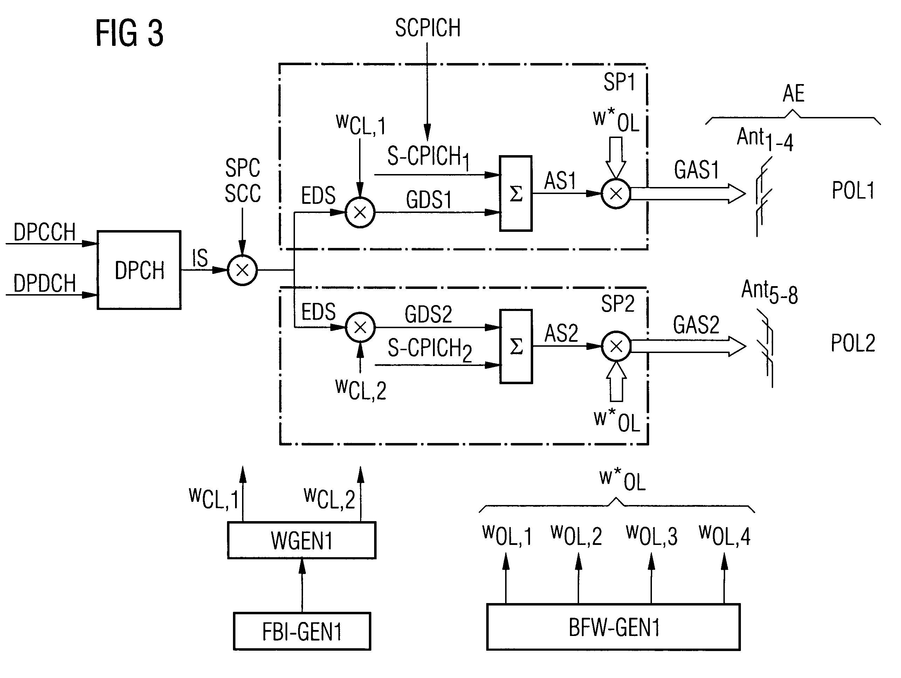

FIG 3 zeigt ein Blockschaltbild zur Datenübertragung gemäß der vorliegenden Erfindung.

Bei einem FDD-UMTS-Funkkommunikationssystem, Release '99, werden vergleichend mit FIG 1 Steuerungsdaten eines "Dedicated Physical Control Channel" (DPCCH), der einen teilnehmerspezifischen physikalischen Kontrollübertragungskanal bildet, mit Daten eines "Uplink Dedicated Physical Data Channel" (DPDCH), der einen teilnehmerspezifischen physikalischen Datenübertragungskanal bildet, mit Hilfe eines Multiplexverfahrens zu einem Informationssignal IS eines "Dedicated Physical Channel" (DPCH) zusammengefasst, der einen teilnehmerspezifischen physikalischen Übertragungskanal bildet.

Das Informationssignal IS wird mit Hilfe eines Spreizcodes SPC ("spreading code") und mit Hilfe eines Verwürfelungscodes SCC ("scrambling code") gespreizt, verwürfelt und dadurch ein Eingangsdatensignal EDS für eine nachfolgende Verarbeitung gebildet.

Seitens einer als NodeB ausgestalteten zentralen Funkkommunikationseinrichtung ist eine Antenneneinrichtung AE mit Antennenelementen Ant1 bis Ant8 vorgesehen, wobei die Antennenelemente Ant1 bis Ant4 einer ersten Gruppe mit einer ersten Polarisation POL1 und die Antennenelemente Ant5 bis Ant8 einer zweiten Gruppe mit einer zweiten Polarisation POL2 zugeordnet sind. Dabei sind die Antennenelemente Ant1 bis Ant4 der ersten Gruppe +45°polarisiert, während die Antennenelemente Ant5 bis Ant8 der zweiten Gruppe -45°polarisiert sind.

Hier nicht dargestellt ist eine erste horizontale Polarisation Pol1 und eine zweite vertikale Polarisation Pol2, die ebenfalls erfindungsgemäß zuordenbar sind. Eine Verwendung von dual-polarisierten Antennen zur Bildung der Antenneneinrichtung AE ist wegen geringer mechanischer Abmessungen bei der Antennenanordnung AE besonders bevorzugt.

Besonders vorteilhaft sind die Antennenelemente Ant1 bis Ant4 und die Antennenelemente Ant5 bis Ant8 zu einer Dualpolarisierten Antennenanordnung zusammengefasst, die mit besonders geringem mechanischen Platzbedarf realisierbar ist.

Hier nicht dargestellt ist jedoch auch eine Space-Diversity-Antennenanordnung als Antenneneinrichtung AE einsetzbar. Dabei wären die Antennenelemente Ant1 bis Ant8 jeweils gleich polarisiert, jedoch wären die Antennenelemente Ant1 bis Ant4 der ersten Gruppe räumlich von den Antennenelementen Ant5 bis Ant8 der zweiten Gruppe getrennt.

Jeder Antennengruppe bzw. jeder Polarisation POL1, POL2 wird jeweils ein Signalpfad SP1, SP2 zugeordnet. So wird der ersten Gruppe mit der ersten Polarisation POL1 ein erster Signalpfad SP1 und der zweiten Polarisation POL2 ein zweiter Signalpfad SP2 zugeordnet.

Das Eingangsdatensignal EDS gelangt sowohl an den ersten Signalpfad SP1 als auch an den zweiten Signalpfad SP2. Innerhalb des ersten Signalpfads SP1 bzw. des zweiten Signalpfads SP2 wird das Eingangsdatensignal EDS mit einem teilnehmerspezifischen Wichtungsfaktor W_{CL,1} bzw. W_{CL,2} zur Bildung eines gewichteten Datensignals GDS1 bzw. GDS2 multipliziert. Das gewichtete Datensignal GDS1 bzw. GDS2 wird in jedem einzelnen Signalpfad SP1 bzw. SP2 mit einem strahlungsdiagrammspezifisch zuordenbaren Pilotsignal S-CPICH₁ bzw. S-CPICH₂ eines SCPICH-Kanals, der einen "Secondary Common Pilot Channel" bildet, zur Bildung eines Antennensignals AS1 bzw. AS2 addiert.

Das Antennensignal AS1 bzw. AS2 wird innerhalb jedes einzelnen Signalpfads SP1 bzw. SP2 mit strahlungsdiagrammspezifischen Wichtungsfaktoren w_{OL,1} bis w_{OL,4} zur Bildung von gewichteten Antennensignalen GAS1 bzw. GAS2 multipliziert, wobei die Wichtungsfaktoren w_{OL,1} bis w_{OL,4} einen Vektor w_{OL}* bilden.

Ein erstes gewichtetes Antennensignal GAS1 gelangt zur Abstrahlung an die erste Gruppe mit den Antennenelementen Ant1 bis Ant4, die die erste Polarisation POL1 aufweisen, während ein zweites gewichtetes Antennensignal GAS2 an die zweite Gruppe mit den Antennenelementen Ant5 bis Ant8 zur Abstrahlung gelangt, die die zweite Polarisation POL2 aufweisen.

Das Pilotsignal S-CPICH₁ und das Pilotsignal S-CPICH₂ unterscheiden sich im Spreizcode um seitens des Teilnehmers eine Detektion bzw. Zuordnung vornehmen zu können.

Die Bildung bzw. Generierung der teilnehmerspezifischen Wichtungsfaktoren W_{CL,1} bzw. W_{CL,2} erfolgt mit Hilfe einer Einrichtung WGEN1 und basiert auf Feedback-Informationen FBI, die mit Hilfe einer Einrichtung FBI-GEN1 gewonnen werden. Die Feedback-Informationen FBI werden aus einer Uplink-Verbindung, die mit Hilfe des "Uplink Dedicated Physical Data Channel" (DPDCH), also des teilnehmerspezifischen physikalischen Datenübertragungskanals, durchgeführt wird, gewonnen und ist beispielsweise im Standardisierungs-Dokument TS 25.214 näher beschrieben.

Die strahlungsdiagrammspezifischen Wichtungsfaktoren w_{OL,1} bis w_{OL,4} werden mit Hilfe einer Einrichtung BFW-GEN1 strahlungsdiagrammspezifisch und basierend auf einer Schätzung einer Uplink-Verbindung vom Teilnehmer zum NodeB gewonnen. Näheres dazu ist den unter FIG 2 genannten Druckschriften entnehmbar.

Von den Antennenelementen Ant1 bis Ant4 wird mit Hilfe des erfindungsgemäßen Verfahrens auf einen Teilnehmer TN bzw. auf eine Gruppe mehrerer Teilnehmer ein +45° polarisiertes Strahlungsdiagramm gerichtet, während von den Antennenelementen Ant5 bis Ant8 ein -45° polarisiertes Strahlungsdiagramm auf den Teilnehmer bzw. auf die Gruppe der Teilnehmer gerichtet wird.

Das in FIG 3 beschriebene Informationssignal IS wird teilnehmerspezifisch gebildet.
Für den hier nicht dargestellten Fall, dass das Informationssignal IS aus teilnehmerspezifischen Daten eines PDSCH-Übertragungskanals oder eines HS-PDSCH-Übertragungskanals oder aus teilnehmerspezifischen Kontrolldaten eines HS-SCCH-Kontrollübertragungskanals gebildet wird, ist das erfindungsgemäße Verfahren ebenfalls anwendbar. Die Bildung dieser Informationssignale IS ist den Standardisierungs-Dokumenten TS 25.211 bis TS 25.215 entnehmbar.

## Patentansprüche

1. Verfahren zur Datenübertragung von einer zentralen Funkkommunikationseinrichtung zu einem Teilnehmer eines UMTS-FDD-Funkkommunikationssystems
- bei dem ein teilnehmerspezifisches Informationssignal (IS) gespreizt und verwürfelt als Eingangsdatensignal (EDS) an mindestens zwei Signalpfade (SP1,SP2) gelangt,
- bei dem in jedem Signalpfad (SP1,SP2) das Eingangsdatensignal (EDS) mit teilnehmerspezifischen Wichtungsfaktoren (W_{CL,1} , W_{CL,2}) zur Bildung eines gewichteten Datensignals (GDS1,GDS2) multipliziert werden,
- bei dem in jedem Signalpfad (SP1,SP2) das gewichtete Datensignal (GDS1,GDS2) mit einem strahlungsdiagrammspezifischen Pilotsignal (SCPICH₁,SCPICH₂) eines gemeinsamen Pilotübertragungskanals (SCPICH) zur Bildung eines Antennensignals (AS1,AS2) addiert wird,
- bei dem in jedem Signalpfad (SP1,SP2) das Antennensignal (AS1,AS2) mit strahlungsdiagrammspezifischen Wichtungsfaktoren (W_{OL,1}, ..., W_{OL,4}) zur Bildung eines gewichteten Antenennsignals (GAS1,GAS2) multipliziert wird,
- bei dem die gewichteten Antennensignale (GAS1,GAS2) der beiden Signalpfade (SP1,SP2) an eine Antenneneinrichtung (AE) zur Abstrahlung gelangen.

2. Verfahren nach Anspruch 1,
- bei dem die Antenneneinrichtung (AE) aus Antennenelementen (ANT1,...,ANT8) gebildet wird und über die Antennenelemente die gewichteten Antennensignale (GAS1,GAS2) abgestrahlt werden, und
- bei dem die Antennenelemente (ANT1,...,ANT8) mindestens einer ersten Gruppe mit einer ersten Polarisation (POL1) und einer zweiten Gruppe mit einer zweiten Polarisation (POL2) zugeordnet werden.

3. Verfahren nach Anspruch 2, bei dem der Polarisation der ersten Gruppe eine zur Polarisation der zweiten Gruppe orthogonale Polarisation (POL1,POL2) zugewiesen wird oder bei der die Polarisationen (Pol1,Pol2) der beiden Gruppen gleich sind.

4. Verfahren nach Anspruch 3,
- bei dem als erste Polarisation (POL1) eine +45°Polarisation und als zweite Polarisation (POL2) eine -45°Polarisation verwendet wird, oder
- bei dem als erste Polarisation (POL1) eine horizontale Polarisation und als zweite Polarisation (POL2) eine vertikale Polarisation verwendet wird.

5. Verfahren nach einem der Ansprüche 2 bis 4, bei dem die Antennenelemente (Ant1 bis Ant8) der Antenneneinrichtung (AE) eine Polarisationsdiversity-Antennenanordnung oder eine Spacediversity-Antennenanordnung bilden.

6. Verfahren nach einem der Ansprüche 2 bis 5, bei dem die gewichteten Antennensignale (GAS1) des ersten Signalpfads (SP1) über die erste Polarisation (POL1) und die gewichteten Antennensignale (GAS2) des zweiten Signalpfads (SP2) über die zweite Polarisation (POL2) abgestrahlt werden.

7. Verfahren nach einem der vorhergehenden Ansprüche, bei dem die teilnehmerspezifischen Wichtungsfaktoren (W_{CL,1} , W_{CL,2}) basierend auf einer teilnehmerspezifischen Verbindung (UL), die mit Hilfe des teilnehmerspezifischen physikalischen Kontrollübertragungskanals (DPCCH) vom Teilnehmer zur zentralen Funkkommunikationseinrichtung durchgeführt wird, gewonnen werden.

8. Verfahren nach einem der vorhergehenden Ansprüche, bei dem die strahlungsdiagrammspezifischen Wichtungsfaktoren (W_{OL,1}, ..., W_{OL,4}) basierend auf einer Funkübertragungskanalschätzung einer teilnehmerspezifischen Verbindung (UL) vom Teilnehmer (TN) zur zentralen Funkkommunikationseinrichtung (NodeB) gewonnen werden.

9. Verfahren nach einem der vorhergehenden Ansprüche, bei dem sich die strahlungsdiagrammspezifischen Pilotsignale (SCPICH₁,SCPICH₂) der beiden Signalpfade (SP1,SP2) im Spreizcode unterscheiden.

10. Verfahren nach einem der vorhergehenden Ansprüche, bei dem das Informationssignal (IS) aus Daten eines teilnehmerspezifischen physikalischen Datenübertragungskanals (DPDCH) und aus Steuerungsdaten eines teilnehmerspezifischen physikalischen Kontrollübertragungskanals (DPCCH) mit Hilfe eines Multiplexverfahrens das Informationssignal (IS) eines teilnehmerspezifischen physikalischen Übertragungskanals (DPCH) gebildet werden.

11. Verfahren nach Anspruch 10, bei dem als teilnehmerspezifischer physikalischer Datenübertragungskanal ein DPDCH-Kanal und als teilnehmerspezifischer physikalischer Kontrollübertragungskanal ein DPCCH-Kanal und als teilnehmerspezifischer physikalischer Übertragungskanal ein DPCH-Kanal des UMTS-FDD-Funkkommunikationssystems verwendet wird.

12. Verfahren nach einem Ansprüche 1 bis 9, bei dem das Informationssignal (IS) aus teilnehmerspezifischen Daten eines PDSCH-Übertragungskanals oder eines HS-PDSCH-Übertragungskanals oder aus teilnehmerspezifischen Kontrolldaten eines HS-SCCH-Kontrollübertragungskanals des UMTS-FDD-Funkkommunikationssystems gebildet werden.

13. Verfahren nach einem der vorhergehenden Ansprüche, bei dem als gemeinsamer Pilotübertragungskanal ein SCPICH-Kanal des UMTS-FDD-Funkkommunikationssystems verwendet wird.
